# EUROPEAN PATENT APPLICATION

(11) **EP 1 956 788 A1**
(43) Date of publication of application: **13.08.2008**
(21) Application number: 07002663.8
(22) Date of filing: 07.02.2007
(51) Int. Cl.: H04L 29/06

(54) **Method and arrangement to assist in the identification of multimedia data to be intercepted**

(71) Applicant: Siemens Networks GmbH & Co. KG, 81541 München (DE)
(72) Inventor: Paulis, Herbert, 1050 Wien (AT); Spalt, Bernhard, 1150 Wien (AT)
(74) Representative: Maier, Daniel Oliver

(57) **Abstract**

Method and arrangement to assist in the identification of multimedia data MMD to be intercepted and belonging to a multimedia broadcast or multicast service MBMS in a communication access network PLMN, whereas at least one information data field MMRI is generated which determines the type of the multimedia data MMD to be intercepted.

## Description

The invention relates to a method and an arrangement to assist in the identification of multimedia data to be intercepted in a communication access network, said data being distributed by a multimedia broadcast or multicast service.

When an operator builds a public telecommunication network, the legal authorities may,want to listen to the traffic that is transmitted through the network. This "tapping" performed by the authorities is called lawful interception.

Lawful interception enables the authorities to trace any kind of traffic, e.g. speech, data, signaling information, short messages, etc., in case of investigation of expected criminal activity of the target subscriber(s). In many countries the possibility of performing lawful interception is a legal pre-requirement to launch and operate a commercial public telecommunication network, especially a third generation mobile communication system 3GPP MS.

The specification 3GPP TS 33.107, Release 7, 2006 of the 3^{rd} Generation Partnership Project Technical Specification Group Services and System Aspects, 3G security describes the architecture and functional requirements of lawful interception within a 3GPP MS.

The specification shows the service requirements from a law enforcement point of view. The aim of that document is to define a 3GPP MS interception system that supports a number of regional interception regulations.

The handover interfaces for lawful interception of packet-data services, circuit switched services, and multimedia services within the 3GPP MS network for stage 3 are described in 3GPP TS 33.108, Release 7, 2005.

Both specifications describe, among other things, how contents of a communication are passed to the law enforcement agencies via an X1_1 transfer interface and how call data, also known as intercept related information, is passed to said agencies via an X1_2 interface.

Intercept related information consists of information about the targeted communication, including destination of a voice call, source of a call, time of the call, duration, etc. Call content is namely the stream of data carrying the call. For Internet Protocol based services intercept related information is dependent on parameters associated with the traffic from a given application to be intercepted. For example, in the case of e-mail intercept related information would be similar to the header information on an e-mail message, e.g. destination e-mail address, source e-mail address, time e-mail was transmitted, as well as pertinent header information within the Internet Protocol packets conveying the message, e.g. source IP address of e-mail server originating the e-mail message.

For the multimedia broadcast and multicast services currently implemented, the call related data for the intercept related information still does not offer any assistance with identification. Hence it is very difficult for the law enforcement agencies to analyze the streams of data from multimedia broadcast and multicast services.

It is the object of the present invention to specify a method and an arrangement to assist in the identification of multimedia data from multimedia broadcast and multicast services, thereby enabling the law enforcement agencies to perform an analysis with ease.

According to the invention the object set for the method and the arrangement of the type mentioned in the introduction is achieved by the features set out in the independent patent claims.

The subject matter of the invention has the advantage that multimedia data to be intercepted from multimedia broadcast and multicast services can be identified.

The subject matter of the invention has the further advantage that the multimedia data to be intercepted from multimedia broadcast and multicast services can be differentiated as regards content and signaling.

Another advantage is that it is considerably simpler for the law enforcement agencies to analyze the intercepted multimedia data from multimedia broadcast and multicast services.

Further advantageous embodiments are specified in the subclaims.

Further special features of the invention are evident from the subsequent explanations of an exemplary embodiment on the basis of a drawing.

This shows:

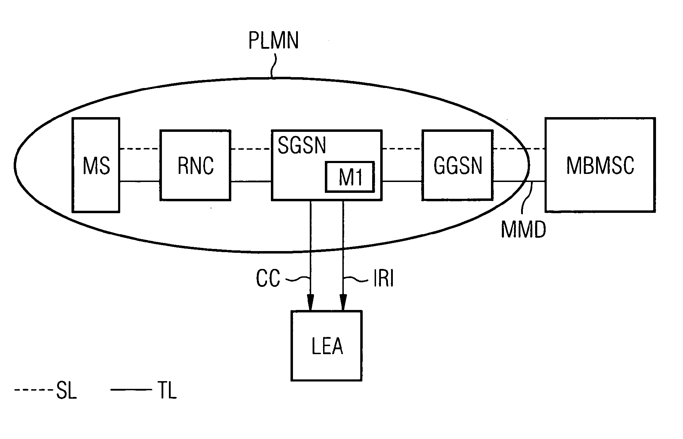

- Fig. 1:: a block diagram of a mobile communication access network.

The invention describes an arrangement and the associated method to assist in the identification of multimedia data MMD to be intercepted and belonging to a multimedia broadcast or multicast service MBMS in a communication access network PLMN. A first means M1 is provided and is designed such that it can generate an information data field MMRI which determines the type of multimedia data MMD to be intercepted.

The communication access network PLMN can be a mobile radio network, and the first means M1 is then arranged in a serving GPRS support node SGSN of the communication access network PLMN.

The serving GPRS support node SSGS sends the multimedia data MMD intercepted in the serving GPRS support node SGSN together with the information data field MMRI to a monitoring unit LEA by means of transfer interfaces.

The information data field MMRI adopts at least two statuses, for example the three statuses are "Signaling", "Content" and "Not relevant".

The arrangement in Fig. 1 shows in diagrammatic form a part of a mobile communication access network PLMN supporting GPRS in which multimedia data MMD of at least one multimedia broadcast and unicast service center MBMSC is transmitted to at least one mobile subscriber MS. The communication access network PLMN consists of at least one support node GGSN which is connected to at least one serving GPRS support node SGSN, which in turn is connected to at least one radio network controller RNC.

The multimedia data reaches the mobile subscriber MS via a logical subscriber line TL and the associated signaling reaches said mobile subscriber MS via a logical signaling line.

All mobile subscriber MS data packets will be transmitted through the serving GPRS support node SGSN that is currently serving the mobile subscriber MS. Short message service, broadcast services, etc. that are transmitted through GPRS radio channels are also available in the serving GPRS support node SGSN like other user data packets. The serving GPRS support node SGSN knows the location of the mobile subscriber MS as well. Information available in the serving GPRS support node SGSN is packet data protocol user traffic, short message traffic, broadcast and unicast traffic, location of the user, subscriber information, IMEI, IMSI, packet data protocol addresses, etc.

Multimedia data CC to be intercepted, also known as content of communication, as well as the interception related information IRI is formed in the serving GPRS support node SGSN and is transmitted to a law enforcement unit LEA of a law enforcement authority entitled to intercept telecommunications via corresponding transfer interfaces, for example H13 and HI2 in accordance with ETSI ES-201-671.

Intercepted multimedia data CC and interception related information IRI are typically delivered from a network operator of the telecommunication subscriber network PLMN to the law enforcement unit LEA in an encrypted format over an Internet Protocol based virtual private network.

Interception related information IRI specifies, among other things, from whom to whom the multimedia data MMD is sent, as well as the start and end of the transmission.

A first means M1, for example a data field generator, in the serving GPRS support node SGSN generates an information data field MMRI which is added to the interception related information IRI. The information data field MMRI determines the type of multimedia data MMD to be intercepted or monitored and can for example adopt the three statuses "Signaling", "Content" and "Not relevant".

Using the interception related information IRI accompanying the monitored multimedia data CC together with the information data field MMRI the law enforcement authority is thus able, by means of the law enforcement unit LEA, to assign intercepted multimedia data MMD to the multimedia broadcast and unicast service MBMS. In the absence of the information data field MMRI this would not be possible, since the data does not differ from conventional call data. Thus the analysis by the law enforcement authority is considerably simplified.

## Claims

1. A method to assist in the identification of multimedia data (MMD) to be intercepted and belonging to a multimedia broadcast or multicast service (MBMS) in a communication access network (PLMN), whereas at least one information data field (MMRI) is generated which determines the type of the multimedia data (MMD) to be intercepted.

2. The method as claimed in claim 1,
**characterized in that**
the information data field (MMRI) is designed as part of an intercept related information data block (IRI).

3. The method as claimed in claim 1 or 2,
**characterized in that**
the information data field (MMRI) can adopt at least two statuses.

4. The method as claimed in claim 3,
**characterized in that**
the statuses are "Signaling", "Content" and "Not relevant".

5. The method as claimed in one of the preceding claims,
**characterized in that**
the multimedia data (MMD) to be intercepted together with the information data field (MMRI) are sent to a monitoring unit (LEA).

6. An arrangement to assist in the identification of multimedia data (MMD) to be intercepted and belonging to a multimedia broadcast or multicast service (MBMS) in a communication access network (PLMN), whereas a first means (M1) is provided and designed such that an information data field (MMRI) can be generated which determines the type of the multimedia data (MMD) to be intercepted.

7. The arrangement as claimed in claim 6,
**characterized in that**
the communication access network (PLMN) is a mobile radio network and that the first means (M1) is arranged in a serving GPRS support node (SGSN) of the communication access network (PLMN).

8. The arrangement as claimed in claim 7,
**characterized in that**
the serving GPRS support node (SGSN) sends the multimedia data (MMD) intercepted in the serving GPRS support node (SGSN) together with the information data field (MMRI) to a law enforcement unit (LEA).
